Europäisches Patentamt

European Patent Office

Office européen des brevets

(19)

(11) Veröffentlichungsnummer : **0 129 157**
**B1**

(12) **EUROPÄISCHE PATENTSCHRIFT**

(45) Veröffentlichungstag der Patentschrift :
**17.05.89**

(51) Int. Cl.⁴ : **B 25 J   9/00**, B 25 J  19/00

(21) Anmeldenummer : 84106513.9

(22) Anmeldetag : 07.06.84

(54) **Roboterarm.**

(30) Priorität : 21.06.83 DE 3322199

(43) Veröffentlichungstag der Anmeldung :
**27.12.84 Patentblatt 84/52**

(45) Bekanntmachung des Hinweises auf die Patenterteilung : **17.05.89 Patentblatt 89/20**

(84) Benannte Vertragsstaaten :
**AT BE CH DE FR GB IT LI NL SE**

(56) Entgegenhaltungen :
**EP-A- 0 034 959**
**EP-A- 0 058 955**
**DE-A- 2 014 455**
**FR-A- 2 086 976**
**US-A- 4 259 876**

(73) Patentinhaber : **Blomberg Robotertechnik GmbH**
**Voltastrasse 50**
**D-4730 Ahlen (DE)**

(72) Erfinder : **Richter, Hans**
**Oberländer Strasse 123**
**D-8900 Augsburg (DE)**

(74) Vertreter : **Charrier, Rolf, Dipl.-Ing.**
**Postfach 260 Rehlingenstrasse 8**
**D-8900 Augsburg 31 (DE)**

EP 0 129 157 B1

Jouve, 18, rue St-Denis, 75001 Paris, France

**Beschreibung**

Die Erfindung betrifft einen Roboterarm aus mehreren gelenkig miteinander verbundenen Gliedern, wobei jedem Gelenk ein Antriebsmechanismus zugeordnet ist, bestehend aus einem Oberarmglied, das über ein Kreuzgelenk mit einem Gestell verbunden ist sowie einem Unterarmglied, das über ein einachsiges Gelenk mit dem Oberarmglied verbunden ist.

Der US-PS 34 49 769 ist eine Prothese zur Verstärkung der Armkräfte entnehmbar, welche aus einem Oberarmglied, einem Unterarmglied und einem Handglied besteht. Das Oberarmglied ist über ein Kreuzgelenk mit einem Gestell verbunden. Das Oberarmglied beinhaltet ein Drehgelenk, mit dem es möglich ist, die beiden Teile des Oberarmgliedes gegeneinander zu verdrehen. Das Oberarmglied ist über ein einachsiges Gelenk mit dem Unterarmglied verbunden, welches ebenfalls ein Drehgelenk wie das Oberarmglied aufweist. Jedem Gelenk ist ein Antriebsmechanismus zugeordnet.

Eine derartige Prothese ist auf den Arm eines Roboters übertragbar. Mit einem solchen Arm ist es möglich, Bewegungen entsprechend einem menschlichen Arm auszuführen.

Ein solcher Roboterarm weist jedoch, um ausreichend steif zu sein und um schwerere Lasten manipulieren zu können, ein nicht unerhebliches Gewicht auf. Bei Roboterarmen ist man daher stets bestrebt, deren Eigengewicht auszugleichen. Ein Gewichtsausgleich führt dazu, daß die Antriebsmechanismen im wesentlichen nur für die Handhabung der Lasten ausgelegt werden müssen, also die Eigengewichte der einzelnen Glieder des Roboterarms bei der Auslegung der Antriebsmechanismen nicht oder nur unwesentlich berücksichtigt werden müssen. Gewichtsausgleiche führen zu dem weiteren Vorteil, daß die Bewegungen des Roboterarms einfacher programmierbar sind, da das Handglied des Roboterarmes zum Programmieren von der Bedienungsperson relativ leicht von Hand entlang der gewünschten Bahnkurve geführt werden kann, die dieses Handglied später ausführen soll.

Es besteht die Aufgabe, den Roboterarm der eingangs genannten Art so weiterzubilden, daß ein weitgehender Gewichtsausgleich bei den einzelnen Gliedern des Roboterarms möglich ist.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel wird nachfolgend anhand der Zeichnungen näher erläutert. Es zeigen :

Fig. 1 eine Seitenansicht des Roboterarms bei miteinander fluchtenden Achsen von Unter- und Oberarmglied in einer ersten Drehstellung des Unterarmgliedes ;

Fig. 2 eine Draufsicht auf das Oberarmglied in Pfeilrichtung A gem. Fig. 1 in der dort dargestellten Lage der Glieder ;

Fig. 3 eine Ansicht in Pfeilrichtung B gem. Fig. 2 ;

Fig. 4 eine Seitenansicht entsprechend der Fig. 1 in einer zweiten gegenüber Fig. 1 um 90° gedrehten Drehstellung des Unterarmgliedes und

Fig. 5 eine weitere Ausführungsform in perspektivischer Ansicht.

Der Roboterarm besteht aus einem Oberarmglied 1 und einem Unterarmglied 2. Das Oberarmglied 1 ist über ein Kreuzgelenk 3 mit einem Gestell 4 verbunden. Das Kreuzgelenk 3 weist eine horizontale Schwenkachse 5 und eine dazu rechtwinklig verlaufende Schwenkachse 6 auf. Das Oberarmglied 1 weist weiterhin ein Drehgelenk 7 auf, mit dem es möglich ist, den Teil 8 des Oberarmgliedes 1 gegenüber dem Teil 9 des Oberarmgliedes 1, der mit dem Kreuzgelenk 3 verbunden ist, zu verdrehen.

Der Teil 8 des Oberarmgliedes 1 ist mit dem Unterarmglied 2 verbunden über ein Gelenk 10, das nur eine Gelenkachse 11 aufweist.

Das Unterarmglied besteht wiederum aus zwei Teilen 12, 13, die über ein weiteres Drehgelenk 14 miteinander verbunden sind, so daß der Teil 13 gegenüber dem Teil 12, der mit dem Gelenk 10 verbunden ist, verdreht werden kann. Der Teil 13 des Unterarmes 2 ist mit der Hand 15 verbunden über ein weiteres Kreuzgelenk 16, das zwei zueinander rechtwinklig verlaufende Gelenkachsen 17, 18 aufweist.

Der Roboterarm weist also insgesamt sieben Achsen auf, nämlich die Achsen 5, 6, 7, 11, 14, 17, 18. Jeder dieser Achsen ist ein Antriebsmechanismus zugeordnet. Die Antriebsmechanismen umfassen für jede Achse zwei Bowdenzüge, beispielsweise die Bowdenzüge 19, 20 für die Achse 5, die mit einem Antriebsmotor 21 verbunden sind.

Die Längsachse des Oberarmes ist mit 22 und diejenige des Unterarmes mit 23 bezeichnet.

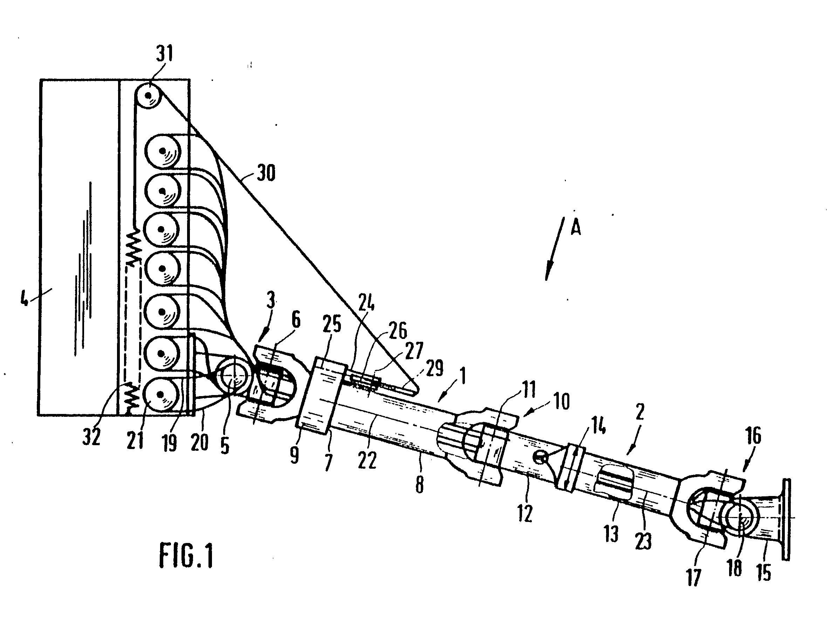

In der in Fig. 1 dargestellten Lage fluchten die Längsachsen 22, 23 miteinander. Die Achse 11 verläuft hierbei rechtwinklig zur Achse 5. Die Eigengewichte von Oberarm 1 und Unterarm 2 bewirken ein Drehmoment im Uhrzeigersinn um die Achse 5.

Am Teil 9, der mit dem Kreuzgelenk 3 verbunden ist, ist eine Welle 24 drehbar gelagert, deren Drehachse parallel zur Längsachse 22 verläuft. Diese Drehachse ist mit 25 bezeichnet. Diese Welle 24 lagert einen Winkelhebel 26, dessen Schwenkachse mit 27 bezeichnet ist. Diese Schwenkachse 27 verläuft rechtwinklig zur Drehachse 25. Der Winkelhebel 26 besteht aus zwei Hebelarmen 28, 29, welche rechtwinklig zueinander verlaufen. Am äußeren Ende des Hebelarms 29 ist ein Seilzug 30 befestigt, der über eine Umlenkrolle 31 am Gestell 4 mit einem Ende einer Zugfeder 32 verbunden ist, deren anderes Ende mit dem Gestell 4 verbunden ist.

Am anderen Hebelarm 28 des Winkelhebels 26 ist ein Seilzug 33 befestigt, der mit einem Arm eines Winkelhebels 34 befestigt ist. Dieser Winkelhebel 34 ist am vorderen Ende des Teils 8 des Oberarmgliedes 1 gelagert, wobei die Lagerachse mit 35 bezeichnet ist. Diese Lagerachse 35 verläuft parallel zur Achse 11 des Gelenks 10. Der weitere Arm des weiteren Winkelhebels 34 ist über einen weiteren Seilzug 36 mit dem hinteren Ende des Unterarmgliedes 2 verbunden, wobei der Verbindungspunkt 37 im Abstand zur Achse 11 angeordnet ist.

Wie schon vorstehend erwähnt, üben bei der Stellung gem. Fig. 1 das Ober- und Unterarmglied 1, 2 ein Drehmoment im Uhrzeigersinn um die Achse 5 aus. Die Achse 11 verläuft hierbei rechtwinklig zur Achse 5. Die Schwenkachse 27 des Winkelhebels 26 verläuft parallel zur Achse 11. Das von den Armen 1, 2 um die Achse 5 ausgeübte Drehmoment, das im Uhrzeigersinn wirkt, wird ausgeglichen durch das über die Feder 32 um die Achse 5 ausgeübte Moment, welches im Gegenuhrzeigersinne wirkt. Wird das Oberarmglied um die Achse 6 geschwenkt, dann ändern sich diese Drehmomentenverhältnisse nicht. Wird das Oberarmglied 1 um die Achse 5 aus der Stellung nach Fig. 1 nach unten geschwenkt, dann vermindert sich das infolge der Eigengewichte vorhandene Drehmoment um die Achse 5, wirkend im Uhrzeigersinn. Da bei dieser Schwenkbewegung um die Achse 5 gleichzeitig der horizontale Abstand zwischen der Achse 5 und dem Anlenkpunkt des Seilzuges 30 am Hebelarm 29 vermindert wird, wird auch gleichzeitig das Gegenmoment um die Achse 5 vermindert, wodurch der Gewichtsausgleich erhalten wird. Hierbei sei vorausgesetzt, daß am Seilzug 30 eine konstante Kraft wirkt. Dies ist gegeben, wenn die Feder 32 ersetzt ist durch ein Gegengewicht.

Bei den vorbeschriebenen Bewegungen ändert sich die Lage des Winkelhebels 26 nicht, d. h. dessen Schwenkachse 27 verläuft stets rechtwinklig zur Achse 5 und sein Hebelarm 29 parallel zur Achse 22.

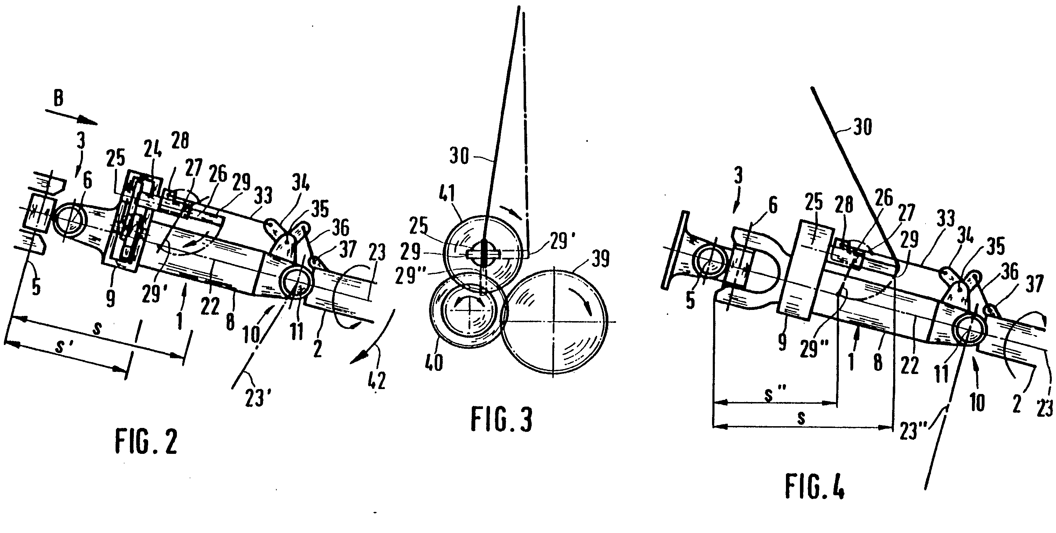

Es sei nun der Fall angenommen, daß das Unterarmglied 2 um die Achse 11 geschwenkt wird. Hierbei sei angenommen, daß die Achse 11 nach wie vor rechtwinklig zur Achse 5 verläuft. In Fig. 2 ist angedeutet, daß das Unterarmglied 2 um mehr als 90° um die Achse 11 geschwenkt wurde. Die Längsachse 23 nimmt dann die Stellung 23′ ein. Da der Masseschwerpunkt des Unterarmgliedes 2 nunmehr einen geringeren horizontalen Abstand zur Achse 5 aufweist, hat sich somit auch das um die Achse 5 wirkende Drehmoment, im Uhrzeigersinn wirkend, vermindert. Die Schwenkbewegung der Längsachse 23 in die Stellung 23′ bewirkt, daß auch der Winkelhebel 26 geschwenkt wird, derart, daß sein Hebelarm 29 nunmehr die Stellung 29′ einnimmt, bei der sein freies Ende einen geringeren horizontalen Abstand zur Achse 5 aufweist als zuvor (S zu S′). Der geringere horizontale Abstand bewirkt eine Verminderung des um die Achse 5 wirkenden Gegenmoments. Wird also das Unterarmglied 2 aus der in den Fig. 1 und 2 gezeigten Stellung um die Achse 11 geschwenkt (Stellung 23′), dann wird hierdurch das Drehmoment des Unterarmgliedes 2, das um die Achse 5 im Uhrzeigersinn wirkt, vermindert, gleichzeitig jedoch auch das Gegenmoment, da das äußere Ende des Hebelarmes 29 nunmehr einen geringeren horizontalen Abstand S′ (Stellung 29′) zur Achse 5 aufweist. Das Vorstehende gilt für jede Lage des Oberarmgliedes 1 um die Achsen 5 und 6.

Als nächstes sei der Fall behandelt, bei welchem der Teil 8 des Oberarmgliedes gegenüber dem Teil 9 um die Drehachse 7 gedreht wird. Die Achse 11 verläuft dann nicht mehr rechtwinklig zur Achse 5. In Fig. 4 ist der Teil 8 um 90° gegenüber der Stellung in Fig. 1 gedreht. Die Achse 11 verläuft dann parallel zur Achse 5.

Die Achse 11 verläuft nunmehr in allen Stellungen des Oberarmgliedes 1 um die Achsen 5, 6 horizontal. Um auch hier einen Gewichtsausgleich zu erzielen, wird die Welle 24, die den Winkelhebel 26 lagert, gleichsinnig und um gleiche Winkelbeträge um die Achse 25 gedreht, wie der Teil 8 um die Längsachse 22 gedreht wird, derart, daß die Schwenkachse 27 des Winkelhebels 26 stets parallel zur Achse 11 verläuft. Bei der Stellung nach Fig. 4 verläuft somit die Schwenkachse 27 ebenfalls horizontal. Das im Uhrzeigersinn um die Achse 11 wirkende Drehmoment infolge des Eigengewichts des Unterarmgliedes 2 wird somit ausgeglichen durch ein Gegenmoment im Gegenuhrzeigersinn um die Achse 11, das vom Seil 30 über den Winkelhebel 26, das Seil 33, dem weiteren Winkelhebel 34 und das Seil 36 am Anlenkpunkt 37 wirkt. Das Eigengewicht des Oberarmes 1, das als Drehmoment im Uhrzeigersinn um die Achse 5 wirkt, wird ausgeglichen durch die an der Achse 27 nach oben wirkende Kraft.

Gemäß Fig. 4 fluchten die Längsachsen 22, 23 miteinander.

In Fig. 4 ist noch der Fall dargestellt, daß das Unterarmglied 2 um 90° nach unten geschwenkt ist, also die Längsachse 23 die Stellung 23″ einnimmt. Das vom Unterarmglied 2 infolge seines Eigengewichts erzeugte Drehmoment im Uhrzeigersinn wird damit geringer. Wie schon im Zusammenhang mit den Fig. 1 und 2 beschrieben, wird bei der Schwenkung in die Lage 23″ der Winkelhebel 26 ebenfalls um einen entsprechenden Winkelbetrag in die Stellung 26″ geschwenkt, bei der das vordere Ende des Hebelarmes 29 einen geringeren horizontalen Abstand S″ zur Achse 5 aufweist, so daß nunmehr auch das Gegenmoment im Gegenuhrzeigersinn vermindert ist.

Vorstehend wurden die Extremlagen beschrieben. Auch in den jeweiligen Zwischenstellungen ist ein voller Gewichtsausgleich vorhanden.

Die Umsetzung der Drehbewegung des Teils 8 in eine entsprechende Drehbewegung der Welle 24 erfolgt mittels eines Getriebes, das in Fig. 3 dargestellt ist. Zusammen mit dem Teil 8 dreht sich das Zahnrad 39. Dieses Zahnrad 39 kämmt mit einem Doppelzahnrad 40, das seinerseits mit einem weiteren Zahnrad 41 kämmt, auf welchem die Welle 24 angeordnet ist. In Fig. 3 sind auch dargestellt die verschiedenen Lagen, die der Winkelhebel 26 in den vorbeschriebenen Stellungen einnimmt.

Mit 29 bezeichnet und voll ausgezogen ist dargestellt die Lage des Hebelarms 29, wenn die Achsen 22, 23 miteinander fluchten und die Achse 11 rechtwinklig zur Achse 5 verläuft. Strichpunktiert und mit 29' bezeichnet ist die Lage des Hebelarms 29, wenn die Achse 11 rechtwinklig zur Achse 5 verläuft, jedoch das Unterarmglied 2 um die Achse 11 geschwenkt ist (Stellung 23').

Voll schwarz dargestellt ist die Lage des Hebelarms 29, wenn die Stellung nach Fig. 4 vorliegt, bei welcher die Längsachsen 22, 23 miteinander fluchten und die Achse 11 parallel zur Achse 5 verläuft. Mit 29" bezeichnet ist die Lage des Hebelarms 29, wenn die Achsen 5, 11 Parallel zueinander verlaufen und das Unterarmglied 2 um die Achse 11 nach oben um 90° geschwenkt ist und somit die Längsachse 23 die Stellung 23" einnimmt.

Das Oberarmglied 1 und das Unterarmglied 2 sind über das Gelenk 10 miteinander verbunden, welches auch als Ellbogengelenk bezeichnet werden kann. Die beiden Armglieder 1, 2 sind wie Oberarm und Unterarm eines menschlichen Arms zueinander verschwenkbar. Der Anlenkpunkt 37 ist hierbei an der Außenseite des Ellbogens angeordnet.

Werden die Seilzüge 33, 36 durch Stangen ersetzt, dann kann das Unterarmglied 2 auch entgegengesetzt dem Pfeil 42 verschwenkt werden.

Die Kreuzgelenke 3, 16 können auch durch Kugelgelenke ersetzt sein.

Durch die Verwendung von Bowdenzügen, wie den Bowdenzügen 19, 20 für die Gelenkachse 5 und die Anordnung der Antriebsmotoren, wie beispielsweise des Antriebsmotors 21 im Gestell 4 wird eine leichte Konstruktion erreicht, da die relativ schweren Antriebsmotoren nicht mehr direkt an den Gelenkachsen angeordnet sind.

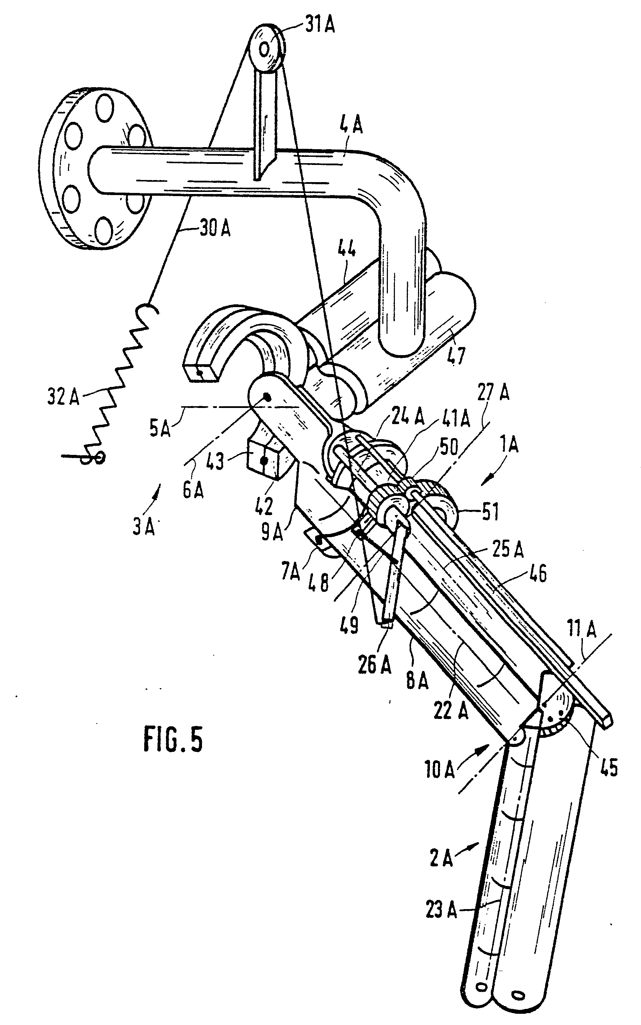

Bei der Ausführungsform nach Fig. 5 sind der ersten Ausführungsform entsprechende Teile mit der gleichen Bezugsziffer versehen, gefolgt von dem Buchstaben A.

Das Gestell 4A trägt einen Motor 47, der starr mit einem Drehring 42 verbunden ist, gegenüber dem ein weiterer Drehring 43 um die Achse 5A verdrehbar ist, wenn der Motor 41 betätigt wird. Am weiteren Drehring 43 angeflanscht und damit mit ihm drehbar ist ein weiterer Motor 44, bei dessen Betätigung Teil 9A des Oberarmgliedes 1A um die Achse 6A schwenkbar ist.

Am Unterarmglied 2A ist ein Zahnradsegment 45 befestigt, dessen Achse mit der Achse 11A zusammenfällt. Es steht in Eingriff mit einer Zahnstange 46, die parallel zur Achse 22A des Oberarmgliedes 1A verläuft. Wird das Unterarmglied 2A relativ zum Teil 8A des Oberarmgliedes 1A um die Achse 11A verschwenkt, dann verschiebt das Zahradsegment 45 die Zahnstange 46 parallel zur Achse 22A.

Am Oberarmteil 9A ist die Welle 24A um die Achse 25A drehbar gelagert. Diese Welle 24A trägt drehfest das Zahnrad 41A und an ihrem vorderen Ende den Hebel 26A, den um die Achse 27A schwenkbar ist. Das Zahnrad 41A ist auf der Welle 24A (parallel zur Achse 22A) axial verschiebbar gelagert. Die Welle 24A trägt einen weiteren Schwenkhebel 48, der um eine Achse parallel zur Achse 27A schwenkbar ist und der gegen das Zahnrad 41A anliegt. Er ist über ein kurzes Seil 49 mit dem Hebel 26A verbunden. Der Abstand zwischen dem Befestigungspunkt des Seiles 49 und der Achse 27A entspricht hierbei dem Hebelarm 28 während der Abstand zwischen dem Befestigungspunkt des Seilzugs 30A und der Achse 27A dem Hebel 29 entspricht.

Wird die Zahnstange 46 axial verschoben, dann verschiebt diese Zahnstange 46 Ihrerseits das Zahnrad 41A auf der Welle 24A axial. Dies wird durch eine nichtdargestellte stirnseitige Anlage der Zahnstange 46 an das Zahnrad 41A bewirkt. Bei einer Axialverschiebung des Zahnrads 41A auf der Welle 24A wird der Schwenkhebel 48 verschwenkt und damit auch der Hebel 26A. Eine Verschwenkung des Unterarmgliedes 2A bewirkt also eine entsprechende Verschwenkung des Hebels 26A. Fluchten also die Achsen 22A und 23A miteinander, dann verläuft der Hebel 26A in der Flucht der Achse 25A der Welle 24A.

Am Oberarmteil 9A ist ein Ritzel 50 drehbar gelagert, das in Eingriff mit dem Zahnrad 41A steht und zusammen mit diesem axial durch die Zahnstange 46 verschoben werden kann. Dieses Ritzel 50 steht weiterhin in Eingriff mit einem Zahnradsegment 51, das am Oberarmteil 8A drehfest befestigt ist, jedoch ebenfalls durch die Zahnstange 46 axial verschoben werden kann.

Wird der Oberarmteil 8A um das Drehgelenk 7A relativ zum Oberarmteil 9A um die Achse 22A gedreht, dann wird diese Drehbewegung durch das Zahnradsegment 51 über das Ritzel 50 auf das Zahnrad 41A übertragen, wodurch die Welle 24A um die Achse 25A gedreht wird. Hierdurch wird der Hebel 26A mit seiner Schwenkachse 27A um die Achse 25A gedreht. Diese Drehbewegung entspricht der Drehbewegung der Welle 24 gem. dem ersten Ausführungsbeispiel.

Wie im ersten Ausführungsbeispiel wird also auch hier erreicht, daß die räumliche Orientierung des Hebels 26A bzw. die räumliche Orientierung des Hebelarmes 29 nach dem ersten Ausführungsbeispiel stets gleich ist der räumlichen Orientierung des Unterarmgliedes 2A. Es ist auf diese Weise möglich, das Gewicht der Armglieder 1A, 2A in jeder räumlichen Orientierung auszugleichen durch die Kraft der Feder 32 bzw. 32A. Anstelle der Feder 32 bzw. 32A kann ein Hydraulik- bzw. Pneumatikzylinder Verwendung finden.

Bei dem Ausführungsbeispiel nach Fig. 5 bestehen die Armglieder 1A, 2A aus Halbschalen, in welche ein menschlicher Arm eingesetzt werden kann, um den Roboterarm zu programmieren.

**Patentansprüche**

1. Roboterarm aus mehreren gelenkig miteinander verbundenen Gliedern, wobei jedem Gelenk ein Antriebsmechanismus zugeordnet ist, bestehend aus einem Oberarmglied, das über ein Kreuzgelenk mit einem Gestell verbunden ist sowie einem Unterarmglied, das über ein einachsiges Gelenk mit dem Oberarmglied verbunden ist, dadurch gekennzeichnet, daß an dem mit dem Kreuzgelenk (3) verbundenen Teil (9) des Oberarmgliedes (1) ein Hebel (26) angelenkt ist, dessen einer Hebelarm (29) in Richtung des Unterarmgliedes (2) weist, wenn die Längsachsen (22, 23) von Ober- und Unterarmglied (1, 2) miteinander fluchten und an dessen Ende eine nach oben gerichtete Kraft angreift, mit dem anderen Hebelarm (28) des Hebels (26) das Unterarmglied (2) verbunden ist und dieses Unterarmglied (2) den Hebel (26) verschwenkt, wenn das Unterarmglied (2) aus seiner Flucht mit dem Oberarmglied (1) verschwenkt wird, wobei der eine Hebelarm (29) des Hebels (26) in Richtung des Kreuzgelenks (3) geschwenkt wird.

2. Roboterarm nach Anspruch 1, dadurch gekennzeichnet, daß der Hebel (26) ein Winkelhebel (26) ist, dessen Hebelarme (28, 29) etwa rechtwinklig zueinander verlaufen.

3. Roboterarm nach Anspruch 1 oder 2, dadurch gekennzeichnet, daß das Oberarmglied (1) ein Drehgelenk (7) beinhaltet, der Hebel (26) an dem mit dem Kreuzgelenk (3) verbundenen Teil (9) des Drehgelenks (7) angelenkt ist, die Schwenkachse (27) des Hebels (26) um eine senkrecht zu ihr und parallel zur Längsachse (22) des Oberarmgliedes (1) verlaufende Achse (25) drehbar ist und diese Schwenkachse (27) um diese rechtwinklig zu ihr verlaufende Achse (25) gedreht wird, wenn der mit dem Unterarmglied (2) verbundene Teil (8) des Drehgelenks (7) gedreht wird, wobei in jeder Drehstellung die Schwenkachse (27) zur Achse (11) des einachsigen Gelenks (10) parallel verläuft.

4. Roboterarm nach Anspruch 2 oder 3, dadurch gekennzeichnet, daß der andere Hebelarm (28) über mindestens eines Seilzug (33 bzw. 36) mit dem Unterarmglied (2) verbunden ist, dessen Anlenkpunkt (37) im Abstand zur Achse (11) des einachsigen Gelenks (10) angeordnet ist.

5. Roboterarm nach Anspruch 4, dadurch gekennzeichnet, daß der andere Hebelarm (28) über einem Seilzug (33) mit einem weiteren Winkelhebel (34) verbunden ist, der am Oberarmglied (1) angelenkt ist, dessen Schwenkachse parallel zur Achse (11) des einachsigen Gelenks (10) verläuft und der über einen weiteren Seilzug (36) mit dem Anlenkpunkt (37) verbunden ist.

6. Roboterarm nach Anspruch 3, dadurch gekennzeichnet, daß der Hebel (26) von einer Welle (24) gelagert wird, deren Achse (25) rechtwinklig zur Achse (11) des einachsigen Gelenks (10) verläuft.

7. Roboterarm nach Anspruch 6, dadurch gekennzeichnet, daß die Welle (24) über ein Getriebe (39, 40, 41) mit dem drehbaren Teil (8) des Oberarmgliedes (1) verbunden ist und diese Welle (24) sich mit dem drehbaren Teil (8) gleichsinnig um gleiche Winkelbeträge dreht.

8. Roboterarm nach einem der Ansprüche 1 bis 7, dadurch gekennzeichnet, daß am einen Hebelarm (29) ein gewichtsbelasteter nach oben verlaufender Seilzug (30) angreift.

9. Roboterarm nach Anspruch 8, dadurch gekennzeichnet, daß der Seilzug (30) mit einer am Gestell (4) befestigten Feder (32) verbunden ist.

10. Roboterarm nach einem der Ansprüche 1 bis 6, dadurch gekennzeichnet, daß zwischen dem einen Hebelarm (29) und dem Gestell (4) ein eine Zugkraft auf den einen Hebelarm (29) ausübender Zylinder angeordnet ist.

11. Roboterarm nach einem der Ansprüche 1 bis 10, dadurch gekennzeichnet, daß die eine Achse (5) des Kreuzgelenks (3) horizontal und die andere Achse (6) dazu rechtwinklig verläuft, das Unterarmglied (2) um mehr als 90° aus seiner Flucht zum Oberarmglied (1) hin schwenkbar ist und der Anlenkpunkt (37) sich an der Außenseite des von Ober- und Unterarmglied (1, 2) gebildeten Ellbogens befindet.

12. Roboterarm nach einem der Ansprüche 1, 3 und 6 bis 10, dadurch gekennzeichnet, daß der Hebel (26A) gestreckt ausgebildet ist, dieser Hebel (26A) durch eine längs des Oberarmgliedes (1A) verschiebbare Zahnstange (46) um seine Schwenkachse (27A) verschwenkbar ist und die Zahnstange (46) in Eingriff steht mit einem Zahnkranzsegment (45), das zusammen mit dem Unterarmglied (2A) um die Achse (11A) des einachsigen Gelenks (10A) drehbar ist.

13. Roboterarm nach Anspruch 12, dadurch gekennzeichnet, daß die den Hebel (26A) lagernde Welle (24A) ein Zahnrad (41A) drehfest jedoch axial verschiebbar trägt, dieses Zahnrad (41A) durch die Zahnstange (46) verschiebbar ist, die Welle (24A) einen weiteren Schwenkhebel (48) lagert, dessen Schwenkachse parallel zur Schwenkachse (27A) des Hebels (26A) verläuft, der Hebel (26A) und der Schwenkhebel (48) durch ein Seil (49) verbunden sind und das Zahnrad (41A) gegen den Schwenkhebel (49) anliegt.

14. Roboterarm nach Anspruch 13, dadurch gekennzeichnet, daß das Zahnrad (41A), dessen Welle (24A) am mit dem Kreuzgelenk (3A) verbundenen Teil (9A) des Oberarmgliedes (1A) gelagert ist, in Eingriff mit einem an diesem Teil (9A) gelagerten Ritzel (50) steht, das seinerseits in Eingriff steht mit einem Zahnradsegment (51), das am weiteren Teil (8A) des Oberarmgliedes (1A) angeordnet ist und das Zahnrad (41A), das Ritzel (50) und das Zahnradsegment (51) zusammen durch die Zahnstange (46) parallel zur Achse (22A) des Oberarmgliedes (1A) verschiebbar sind.

## Claims

1. Robot arm made of several links which are interconnected by hinges, whereby each joint is allotted an actuating mechanism consisting of an upper link, which is connected to a structure via a universal joint, as well as a lower arm link, which is connected to the upper arm link via a uniaxial joint, characterized in that a lever (26) is hinged to the part (9) of the upper arm link (1) which is connected to the universal joint (3), the one lever arm (29) of said lever points in direction of the lower arm link (2) when the longitudinal axes (22, 23) of the upper and lower arm link (1, 2) are in alignment with one another and on whose end an upwardly directed force acts, the lower arm link (2) is connected to the other lever arm (28) of the lever (26) and this lower arm link (2) turns the lever (26) when the lower arm link (2) is turned out of its alignment with the upper arm link (1), whereby the one lever arm (29) of the lever (26) is turned in direction of the universal joint (3).

2. Robot arm according to claim 1, characterized in that the lever (26) is a toggle lever (26) whose lever arms (28, 29) extend approximately at right angles to one another.

3. Robot arm according to claim 1 or 2, characterized in that the upper arm link (1) contains a swivel joint (7), the lever (26) is pivoted to the part (9) of the swivel joint (7) connected to the universal joint (3), the swivel axis (27) of the lever (26) can be rotated about an axis (25) which extends vertically to it and parallel to the longitudinal axis (22) of the upper arm link (1) and this swivel axis (27) is turned about this axis (25) which extends at right angels to it when the part (8) of the swivel joint (7), which is connected to the lower arm link (2), is turned, whereby the swivel axis (27) is parallel to the axis (11) of the uniaxial joint (10) in every swivel position.

4. Robot arm according to claim 2 or 3, characterized in that the other lever arm (28) is connected via at least one cable line (33 or 36 respectively) to the lower arm link (2), whose hinge (37) is spaced from the axis (11) of the uniaxial joint (10).

5. Robot arm according to claim 4, characterized in that the other lever arm (28) is connected via a cable line (33) to an additional toggle lever (34) which is hinged to the upper arm link (1), whose swivel axis is parallel to the axis (11) of the uniaxial joint (10) and which is connected by an additional cable line (36) to the hinge (37).

6. Robot arm according to claim 3, characterized in that the lever (26) is supported by a shaft (24), whose axis (25) is at right angles to the axis (11) of the uniaxial joint (10).

7. Robot arm according to claim 6, characterized in that the shaft (24) is connected by a gear unit (39, 40, 41) to a rotatable part (8) of the upper arm link (1) and this shaft (24) turns in the same direction by the same angle with the rotatable part (8).

8. Robot arm according to one of the claims 1 to 7, characterized in that a weighted cable line (30), which extends upward, acts on the one lever arm (29).

9. Robot arm according to claim 8, characterized in that the cable line (30) is connected with a spring (32) which is fastened to the structure (4).

10. Robot arm according to one of the claims 1 to 6, characterized in that a cylinder, which exerts a tension on the one lever arm (29), is arranged between the one lever arm (29) and the structure (4).

11. Robot arm according to one of the claims 1 to 10, characterized in that the one axis (5) of the universal joint (3) extends horizontally to it and the other axis (6) extends at right angles to it, the lower arm link (2) can be turned by more than 90° out of its alignment toward the upper arm link (1) and the hinge (37) is located on the outside of the elbow formed by the upper and lower arm link (1, 2).

12. Robot arm according to one of the claims 1, 3 and 6 to 10, characterized in that the lever (26A) is extended, this lever (26A) can be rotated about a swivel axis (27A) by means of a toothed rack (46) which can be moved along the upper arm link (1A) and the toothed rack (46) is engaged with a gear ring segment (45) which, together with the lower arm link (2A), can be turned about the axis (11A) of the uni-axial joint (10A).

13. Robot arm according to claim 12, characterized in that the shaft (24A) supporting the lever (26A) carries a gear wheel (41A) which cannot be turned yet is axially slidable, this gear wheel (41A) can be moved by the gear rack (46), the shaft (24A) supports an additional swivel lever (48) whose swivel axis is parallel to the swivel axis (27A) of the lever (26A), the lever (26A) and the swivel lever (48) are connected by a cable (49) and the gear wheel (41A) is adjacent to the swivel lever (49).

14. Robot arm according to claim 13, characterized in that the gear wheel (41A), whose shaft (24A) is mounted on the part (9A) of the upper arm link (1A), which is connected to the universal joint (3A), is engaged with a pinion (50) mounted on the part (9A), which, in turn, is engaged with a gear wheel segment (51), which is arranged on the further part (8A) of the upper arm link (1A) and the gear wheel (41A), the pinion (50) and the gear wheel segment (51) together are slidable parallel to the axis (22A) of the upper arm link (1A) by means of the toothed rack (46).

**Revendications**

1. Bras de robot composé de plusieurs éléments articulés les uns aux autres, à chaque articulation étant affecté un mécanisme d'entraînement constitué d'un élément de bras supérieur relié à un bâti par l'intermédiaire d'une articulation à cardan et d'un élément de bras inférieur relié à l'élément de bras supérieur par l'intermédiaire d'une articulation à un axe, caractérisé en ce que, sur la partie (9) de l'élément de bras supérieur (1) reliée à l'articulation à cardan (3) est articulé un levier (26) dont l'un des bras (29) est orienté dans le sens de l'élément de bras inférieur (2) lorsque les axes longitudinaux (22, 23) des éléments de bras supérieur et inférieur (1, 2) sont alignés et à l'extrémité duquel est appliquée une force dirigée vers le haut, à l'autre bras (28) du levier (26) étant relié l'élément de bras inférieur (2) et ledit élément de bras inférieur (2) faisant pivoter le levier (26) lorsque l'élément de bras inférieur (2) s'écarte de son alignement avec l'élément de bras supérieur (1), l'un des bras (29) du levier (26) étant basculé dans le sens de l'articulation à cardan (3).

2. Bras de robot conforme à la revendication 1, caractérisé en ce que le levier (26) est un levier coudé (26) dont les bras (28, 29) sont sensiblement perpendiculaires l'un à l'autre.

3. Bras de robot conforme à la revendication 1 ou 2, caractérisé en ce que l'élément de bras supérieur (1) comporte une articulation tournante (7), le levier (26) est articulé sur la partie (9) de l'articulation tournante (7) reliée à l'articulation à cardan (3), l'axe de pivotement (27) du levier (26) peut tourner autour d'un axe (25) qui lui est parallèle et qui est parallèle à l'axe longitudinal (22) de l'élément de bras supérieur (1), et ledit axe de pivotement (27) tourne autour de cet axe (25) qui lui est perpendiculaire lorsque la partie (8) de l'articulation tournante (7) reliée à l'élément de bras inférieur (2) tourne, l'axe de pivotement (27) étant parallèle à l'axe (11) de l'articulation à un axe (10) dans chaque position de rotation.

4. Bras de robot conforme à la revendication 2 ou 3, caractérisé en ce que l'autre bras de levier (28) est relié, par l'intermédiaire d'au moins un câble de traction (33 et, respectivement, 36), à l'élément de bras inférieur (2) dont le point d'articulation (37) est disposé à distance de l'axe (11) de l'articulation à un axe (10).

5. Bras de robot conforme à la revendication 4, caractérisé en ce que l'autre bras de levier (28) est relié, par l'intermédiaire d'un câble de traction (33), à un autre levier coudé (34) qui est articulé sur l'élément de bras supérieur (1) dont l'axe de pivotement est parallèle à l'axe (11) de l'articulation à un axe (10) et qui est relié au point d'articulation (37) par l'intermédiaire d'un autre câble de traction (36).

6. Bras de robot conforme à la revendication 3, caractérisé en ce que le levier (26) est supporté par un arbre (24) dont l'axe est perpendiculaire à l'axe (11) de l'articulation à un axe (10).

7. Bras de robot conforme à la revendication 6, caractérisé en ce que l'arbre (24) est relié par un jeu d'engrenages (39, 40, 41) à la partie rotative (8) de l'élément de bras supérieur et ledit arbre (24) tourne dans le même sens que la partie rotative (8) et selon des valeurs angulaires identiques.

8. Bras de robot conforme à l'une des revendications 1 à 7, caractérisé en ce qu'un câble de traction (30) dirigé vers le haut et sollicité par un poids agit sur l'un des bras de levier (29).

9. Bras de robot conforme à la revendication 8, caractérisé en ce que le câble de traction (30) est relié à un ressort (32) fixé au bâti (4).

10. Bras de robot conforme à l'une des revendications 1 à 6, caractérisé en ce qu'entre l'un des bras de levier (29) et le bâti (4) est disposé un vérin exerçant une force de traction sur l'un des bras de levier (29).

11. Bras de robot conforme à l'une des revendications 1 à 10, caractérisé en ce que l'un des axes (5) de l'articulation à cardan (3) est horizontal et l'autre axe (6) lui est perpendiculaire, l'élément de bras inférieur (2) peut s'écarter de plus de 90° de son alignement avec l'élément de bras supérieur (1) et le point d'articulation (37) se trouve sur le côté extérieur du coude formé par les éléments de bras supérieur et inférieur (1, 2).

12. Bras de robot conforme à l'une des revendications 1, 3 et 6 à 10, caractérisé en ce que le levier (26A) est conçu sous forme allongée, ledit levier (26A) peut pivoter selon son axe pivotant (27A) au moyen d'une crémaillère (46) pouvant se déplacer le long de l'élément de bras supérieur (1A), et la crémaillère coopère avec un segment de couronne dentée (45) qui peut pivoter selon l'axe (11A) de l'articulation à un axe (10A) avec l'élément de bras inférieur (2A).

13. Bras de robot conforme à la revendication 12, caractérisé en ce que l'arbre supportant le levier (26) comporte une roue dentée (41A) solidarisée en rotation axiale, ladite roue (41A) peut être déplacée par la crémaillère (46), l'arbre (24A) supporte un autre levier pivotant (48) dont l'axe de pivotement est parallèle à l'axe de pivotement (27A) du levier (26A), le levier (26A) et le levier pivotant (48) sont reliés par un câble et la roue dentée (41A) est appliquée contre le levier pivotant (49).

14. Bras de robot conforme à la revendication 13, caractérisé en ce que la roue dentée (41A), dont l'arbre (24A) est supporté par la partie (9A) de l'élément de bras supérieur (1A) reliée à l'articulation à cardan (3A), coopère avec un pignon (50) qui est monté sur ladite partie (9A) et qui, pour sa part, coopère avec un segment de roue dentée (51) monté sur l'autre partie (8A) de l'élément de bras supérieur (1A), la roue dentée (41A), le pignon (50) et le segment de roue dentée (51) pouvant être déplacés ensemble par la crémaillère (46) parallèlement à l'axe (22A) de l'élément de bras supérieur (1A).

FIG.1

FIG. 2

FIG. 3

FIG. 4

EP 0 129 157 B1

FIG.5